# DEMANDE DE BREVET EUROPEEN

(11) **EP 2 048 033 A1**
(43) Date de publication de la demande: **15.04.2009**
(21) Numéro de dépôt: 08166404.7
(22) Date de dépôt: 10.10.2008
(51) Int. Cl.: B60R 9/045

(54) **Système de galerie escamotable pour véhicule automobile, commandé par un levier, et véhicule correspondant.**

(30) Priorité: 10.10.2007 FR 0707121; 08.02.2008 FR 0850825
(71) Demandeur: Wagon SAS, 79302 Bressuire Cédex (FR)
(72) Inventeur: Fourel, Pascal, 35400 Saint- Malo (FR); Guelzec, Stéphane, 44360 Saint-Etienne de Montluc (FR)
(74) Mandataire: Bioret, Ludovic

(57) **Abrégé**

L'invention concerne un système de galerie pour véhicule automobile, comprenant au moins deux traverses solidaires de deux longerons. Un tel système comprend au moins quatre pieds comprenant chacun un premier axe d'articulation par rapport audit véhicule et un second axe d'articulation avec un desdits longerons, et au moins un levier dont l'axe est destiné à être solidarisé audit véhicule agissant sur au moins un desdits longerons, de façon que lesdites traverses puisse prendre au moins deux positions :
- une position escamotée dans laquelle elles sont sensiblement en contact avec le pavillon dudit véhicule ; et
- une position de portage dans laquelle elles sont surélevées par rapport à ladite position escamotée.

## Description

### 1. Domaine de l'invention

Le domaine de l'invention est celui des équipements automobiles, et plus précisément des galeries pour de tels véhicules.

### 2. Techniques de l'art antérieur

On connaît depuis longtemps des galeries, permettant de transporter des objets à l'extérieur du véhicule, et notamment sur le pavillon de celui-ci. Dans un premier temps, ces galeries se présentaient sous la forme d'un assemblage fixe définissant une zone de stockage sur le pavillon. Selon les cas, cette galerie était fixe ou amovible.

On a ensuite proposé une version simplifiée, formée de traverses amovibles, qui venaient se fixer aux gouttières du pavillon, ou à des éléments de fixation spécifiques prévus à cet effet. Ces barres de galerie présentaient l'avantage, par rapport aux galeries antérieures, d'être moins encombrantes, une fois démontées, et plus simples à manipuler et à installer.

Une autre amélioration a consisté à équiper certains véhicules, notamment de type monospace, utilitaire ou break, de longerons fixes, s'étendant sensiblement parallèlement à l'axe principal du véhicule. Il est alors plus aisé de fixer des traverses sur ces longerons, en cas de besoin, pour former une galerie.

Cette technique présente cependant toujours certains inconvénients. Tout d'abord, lorsque les traverses ne sont pas montées sur les longerons, il est nécessaire de les stocker à un emplacement spécifique. Il n'est généralement pas prévu de tel emplacement dans le véhicule, ce qui conduit l'utilisateur à les stocker en dehors du véhicule, par exemple dans un garage. Ceci est bien sûr peu pratique, notamment si un besoin inopiné de galerie se présente, alors que le véhicule n'est pas au garage, ou à proximité des barres. Il n'est bien sûr pas souhaitable de laisser ces traverses en permanence sur les véhicules, pour des raisons d'esthétique, d'ergonomie, et surtout de pénétration dans l'air et par conséquent de consommation et de bruit aérodynamique qu'elles génèrent.

Un autre inconvénient de cette technique est que la fixation des traverses aux longerons est généralement peu aisée, et nécessite parfois un outillage spécifique.

Afin de s'affranchir de ces inconvénients, on a alors cherché à développer des techniques de galerie qui ne nécessitent pas le démontage de celle-ci.

On connaît ainsi une solution technique mise en oeuvre pour des véhicules de type monospace qui consiste à replier les traverses pour former un aileron à l'arrière du véhicule lorsque l'on a pas besoin de la galerie.

On connaît également des solutions techniques automatisées pour lesquelles les éléments de la galerie peuvent être escamotés pour être stockés dans des logements prévus à cet effet sur la surface du pavillon.

Ces solutions restent cependant complexes et onéreuses. Elles présentent par ailleurs une durée de vie réduite, notamment lorsqu'elles sont motorisées, du fait des contraintes de chargement auxquelles est soumis leur dispositif de motorisation.

### 3. Objectifs de l'invention

L'invention a notamment pour objectif de pallier ces inconvénients de l'art antérieur.

Plus particulièrement, un objectif de l'invention est de fournir une technique de galerie pour véhicule automobile qui soit simple à utiliser et à manipuler par un utilisateur, sans outillage particulier.

L'invention a également pour objectif de fournir une telle technique, qui soit fiable, peu coûteuse et simple à produire et à monter.

Un autre objectif de l'invention est de fournir une telle technique de galerie résolvant le problème du stockage des traverses, lorsqu'elles ne sont pas utilisées.

Encore un autre objectif de l'invention est de fournir une telle technique de galerie, présentant de bonnes qualités esthétiques et ergonomiques.

### 4. Exposé de l'invention

Ces objectifs, ainsi que d'autres, qui apparaîtront plus clairement par la suite, sont atteints selon l'invention à l'aide d'un système de galerie pour véhicule automobile, comprenant au moins deux traverses solidaires de deux longerons.

Selon l'invention, un tel système comprend au moins quatre pieds comprenant chacun un premier axe d'articulation par rapport audit véhicule et un second axe d'articulation avec un desdits longerons, et au moins un levier dont l'axe est destiné à être solidarisé audit véhicule agissant sur au moins un desdits longerons, de façon que lesdites traverses puissent prendre au moins deux positions :
- une position escamotée dans laquelle elles sont en contact avec le pavillon dudit véhicule ; et
- une position de portage dans laquelle elles sont surélevées par rapport à ladite position escamotée.

Ainsi, l'opération de passage de la position de portage à la position escamotée et réciproquement est simple, rapide et aisée et se résume pour l'utilisateur à actionner un ou plusieurs leviers.

Préférentiellement, un levier agissant respectivement sur au moins un des longerons (et donc sur l'extrémité d'au moins deux traverses), est prévu pour modifier la position de la galerie.

Notamment, on peut prévoir un seul levier agissant sur l'ensemble de la galerie, ou deux leviers agissant chacun sur un des côtés de la galerie. Il est également possible, par exemple pour des raisons d'esthétique et d'ergonomie, d'équiper chaque pied de traverse de façon qu'il forme un levier.

Un tel système est prévu pour rester en permanence sur le véhicule que la galerie soit utilisée ou non (même si des moyens de démontage peuvent être prévus, pour des cas exceptionnels ou particuliers), le simple passage en position escamotée dès que la galerie n'est plus utilisée permettant de s'affranchir efficacement des problèmes :
- de bruit aérodynamique ;
- d'esthétique ;
- et de surconsommation de carburant.

La masse des longerons et les traverses qui leur sont associées est supportée par quatre pieds (ou plus, si l'écartement entre les traverses ou la charge maximale le justifie) qui peuvent basculer simultanément pour permettre le passage entre les positions escamotée et de portage.

De façon avantageuse, ledit levier est solidarisé par une articulation à pivot audit longeron.

Ainsi, le longeron peut rester sensiblement horizontal lors du passage de la position escamotée à la position de portage et inversement.

Avantageusement, dans au moins un mode de réalisation particulier de l'invention, ledit levier comprend une poignée montée sur un bras pouvant prendre au moins deux longueurs :
- une longueur de rangement dans laquelle il est rétracté ; et
- une longueur de travail dans laquelle il est déployé.

Ainsi on limite l'effort à fournir pour changer la galerie de position en augmentant la longueur du bras de levier, et le levier peut être raccourci pour faciliter son logement dans le pavillon lorsque les longerons et les traverses sont escamotés.

Selon un autre mode de réalisation particulier de l'invention, ladite articulation pivot a pour axe ledit second axe. Dans ce cas, le système de galerie comprend avantageusement, en outre, des moyens de guidage d'une extrémité dudit levier destinés à coopérer avec au moins une glissière formée et/ou fixée sur ledit véhicule.

Ainsi, on agit avec le levier directement sur un des pieds, ce qui permet de limiter les risques de forçage. Par ailleurs, en prévoyant une glissière, on peut loger au moins une partie du levier sur ou contre le pied sur lequel il agit, pour limiter l'encombrement en position escamotée.

Selon un aspect particulier, un tel système de galerie comprend des moyens de blocage desdits moyens de guidage dans au moins une position prédéterminée de ladite glissière.

Ainsi, on peut prendre appui avec le levier sur le véhicule.

Préférentiellement, lesdits moyens de blocage comprennent des moyens de verrouillage desdits moyens de guidage dans ladite position prédéterminée.

Ainsi, on bloque efficacement et de façon réversible l'extrémité du levier dans la position prédéterminée.

Selon une autre approche, lesdits longerons peuvent être montés mobiles en rotation sur ledit véhicule.

Ainsi, ceux-ci peuvent basculer sous l'action du levier de façon à soulever ou à abaisser les traverses.

Selon un aspect particulier de l'invention, lesdites traverses coulissent par rapport à des moyens de solidarisation portés par les longerons lors du passage de ladite position escamotée à ladite position de portage ou inversement.

Ainsi, les traverses ne sont pas contraintes de basculer pour suivre le mouvement des longerons et peuvent donc conserver une position horizontale. Par ailleurs, un tel coulissement permet de rattraper simplement la variation de distance entre les moyens de solidarisation des traverses aux longerons, due au basculement de ces derniers. Il n'est donc alors pas nécessaire de prévoir des traverses de longueur variable (ce qui est cependant possible, dans d'autres modes de réalisation).

Dans un mode de réalisation particulier de l'invention, au moins un desdits moyens de solidarisation présente une fourche formant ledit levier, entre les branches de laquelle s'insère une extrémité d'une desdites traverses.

De façon préférentielle, un système de galerie tel que décrit précédemment comprend au moins un élément de préhension solidarisé à au moins une première branche d'une desdites fourches.

Ainsi, on peut saisir le levier par ce moyen de préhension pour faire basculer le longeron correspondant de façon à passer de la position de portage à la position escamotée ou inversement.

Dans au moins un mode de réalisation particulier de l'invention, ledit élément de préhension est solidarisé aux deux branches de ladite fourche.

Ainsi, on tire ou pousse de façon symétrique sur la fourche qui forme le levier, ce qui réduit l'intensité des contraintes de flexion et/ou de torsion auxquelles peut être soumis l'axe du levier.

Selon un aspect particulier de l'invention, ledit élément de préhension relie les extrémités de ladite fourche.

Ainsi, on saisit l'élément de préhension au-dessus de la traverse sans interférer avec cette dernière, ce qui est ergonomique.

De façon préférée, au moins une extrémité de chacune desdites traverses présente au moins une glissière de guidage coopérant avec au moins une saillie solidaire d'au moins une desdites branches de ladite fourche.

Ainsi, le guidage en coulissement est mis en oeuvre de façon simple et efficace.

Deux glissières symétriques, et deux saillies correspondantes, peuvent notamment être prévues.

Dans au moins un mode de réalisation particulier de l'invention, dans ladite position escamotée, les traverses pénètrent au moins en partie dans des logements prévus à cet effet dans le pavillon.

Ceci est bien entendu intéressant du point de vue aérodynamique.

Avantageusement, ces logements sont conçus de façon que les traverses affleure avec le pavillon dans la position escamotée.

Ainsi, on améliore les performances aérodynamiques du véhicule et on obtient un aspect esthétique satisfaisant.

Bien entendu, dans au moins un autre mode de réalisation particulier de l'invention, les traverses peuvent également être seulement posées sur le pavillon dans la position escamotée.

L'invention concerne également les véhicules automobiles équipés d'un système de galerie tel que décrit précédemment.

Il peut notamment s'agir de véhicules utilitaires (camionnettes, fourgonnettes,...), de breaks ou de monospaces.

### 5. Liste des figures

D'autres caractéristiques et avantages de l'invention apparaîtront à la lecture de la description suivante de deux modes de réalisation préférentiels, donnés à titre de simples exemples illustratifs et non limitatifs, et des dessins annexés parmi lesquels :
- la figure 1 illustre de façon schématique un véhicule automobile équipé d'un système de galerie en position de portage selon un premier mode de réalisation de l'invention ;
- la figure 2 est une vue de détail du levier du système de galerie présenté à la figure 1 ;
- la figure 3 illustre de façon schématique un pavillon de véhicule automobile équipé d'un système de galerie en position de portage selon une autre approche ;
- la figure 4 illustre, dans une vue de détail, la liaison entre le levier et l'extrémité d'une traverse du système de galerie présentée à la figure 3 ;
- la figure 5 est une vue de détail d'un autre mode de réalisation du levier présenté figure 3 ;
- la figure 6 illustre une traverse dont l'extrémité présente des moyens d'arrimage ;
- la figure 7 est une vue schématique de dessus de la traverse présenté à la figure 3 en position escamotée à l'intérieur d'un logement prévus sur le pavillon ;
- la figure 8 est une vue en coupe de la traverse logée dans le pavillon présentée sur la figure 7 ;
- la figure 9 illustre une technique alternative pour l'escamotage des traverses au contact du pavillon ;
- la figure 10 illustre un pavillon de véhicule automobile équipé d'un système de galerie assemblé à partir de deux modules selon un deuxième mode de réalisation de l'invention, en position de portage ;
- les figures 11 et 12 sont des vues de détail de la zone d'un pied du système de galerie présenté sur la figure 10, respectivement en position escamotée et en position de portage.

### 6. Présentation détaillée de modes de réalisation de l'invention

### 6.1. Rappel du principe de l'invention

Le principe général de l'invention repose donc sur la mise en oeuvre de pieds de galerie articulés et d'un (ou plusieurs) levier(s) pour permettre à un usager de déployer dans une position de portage, ou de replier, manuellement, rapidement et de façon simple une galerie escamotable pour toit de véhicule en fonction de ses besoins.

### 6.2. Description d'un premier mode de réalisation

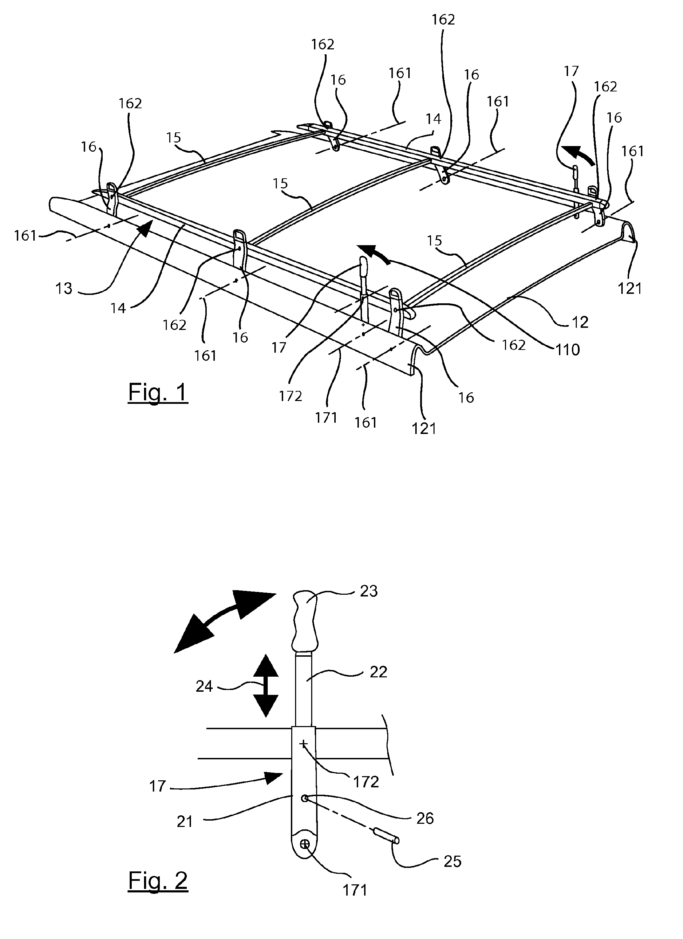

La figure 1 illustre un premier mode de réalisation de l'invention dans une position de portage.

Dans ce mode de réalisation particulier, le système de galerie 13, encore désigné par le terme galerie par la suite par raccourci, est monté sur le pavillon 12 d'un véhicule automobile (de type utilitaire dans cet exemple de mise en oeuvre). Il comprend deux longerons 14 solidarisés à trois traverses 15 en formant un ensemble rigide. Les longerons 14 sont disposés sensiblement dans la direction de déplacement du véhicule et les traverses 15 transversalement.

Les longerons 14 sont chacun supportés par trois pieds 16 sensiblement identiques, solidaires des cornières latérales en « V » 121 du pavillon et espacés régulièrement. Chaque pied 16 est articulé en rotation suivant un premier axe d'articulation 161 par rapport à la cornière 121 et suivant un second axe d'articulation 162 avec le longeron 14 correspondant, la distance entre les axes 161 et 162 étant constante pour tous les pieds. Ainsi chaque tronçon de longeron compris entre deux pieds forme avec ceux-ci un parallélogramme déformable autorisant le passage de la position de portage telle que représentée à une position escamotée par rotation suivant la direction de la flèche 110.

Deux leviers 17 sont solidarisés chacun respectivement à une des cornières 121 au voisinage d'un des pieds 16. L'axe 171 de ces leviers est distinct mais aligné avec les axes 161 des pieds 16. Chaque levier 17 comprend un axe d'articulation 172 avec le longeron sur lequel il agit, séparé de l'axe 171 d'une distance égale à la distance entre les axes 161 et 162, de façon à former également un côté d'un parallélogramme avec le longeron et les pieds. Le levier 17 lorsqu'il pivote autour de son axe entraîne donc le longeron vers le haut ou vers le bas du fait de l'articulation pivot entre ceux-ci.

Dans une variante de ce mode de réalisation, il peut cependant être envisagé de prévoir un unique levier agissant sur un des longerons pour faire passer les traverses de la position de portage à la position escamotée et inversement.

Il peut également être prévu que le levier 17 soit intégré à, ou formé par, un des pieds 16.

La figure 2 précise dans une vue de détail les éléments constitutifs du levier 17. Dans ce mode de réalisation particulier, le corps 21 du levier se prolonge par un bras 22 de longueur variable suivant la direction de la flèche 24 à l'extrémité duquel est fixée une poignée 23 comprenant des zones ergonomiques pour faciliter sa préhension. Le bras 22 peut donc être rétracté pour faciliter son rangement ou déployé jusqu'à une longueur de travail de façon à bénéficier d'un « bras de levier » plus important pour changer la galerie de position.

Dans ce mode de réalisation, des moyens de verrouillage à taquet 25 permettent de bloquer le levier dans trois positions prédéterminées en étant insérés dans un trou borgne 26 prévu à cet effet dans le corps 21 du levier 17.

Dans une variante de ce mode de réalisation, il peut également être prévu d'équiper l'axe du levier d'une roue à cliquet pour verrouiller le levier dans une position prédéterminée. Dans ce cas, une bague mobile solidaire du cliquet peut être montée sur la poignée du levier pour dégager ou engager le cliquet sur la roue.

### 6.3 Description d'un deuxième mode de réalisation

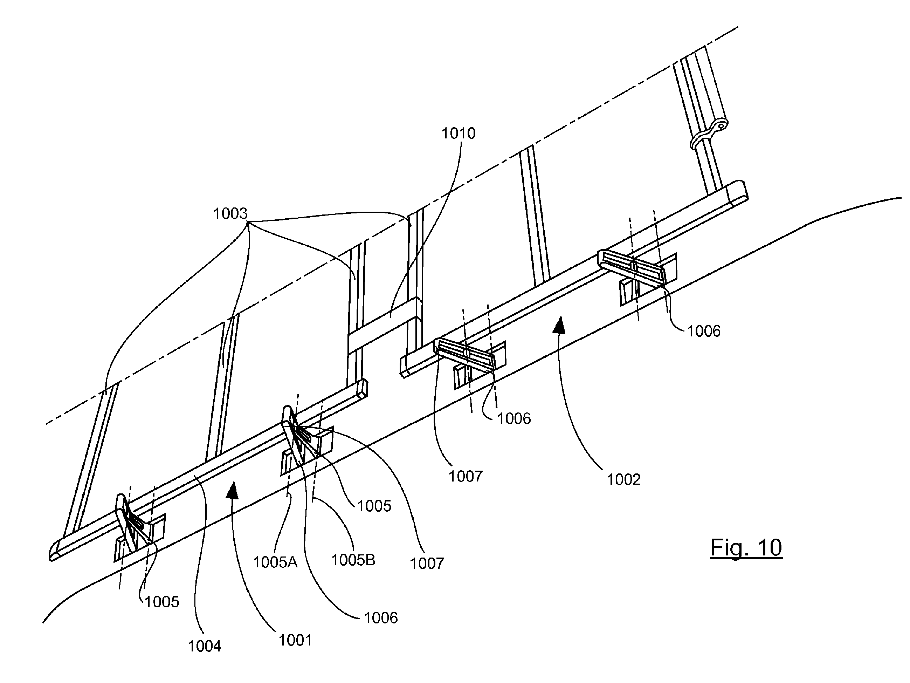

La figure 10 illustre de façon schématique un deuxième mode de réalisation de l'invention dans une position de portage.

Dans ce mode de réalisation particulier présenté en référence à la figure 10 dans une demi-vue en perspective, le système de galerie se présente sous la forme de deux modules 1001 et 1002 identiques montés respectivement sur l'avant et sur l'arrière du pavillon du véhicule. Ces modules sont reliés l'un à l'autre par des éléments de fixation 1010 prévus à cet effet, pour former à partir des deux modules une galerie couvrant sensiblement toute la surface du pavillon en position de portage.

Chacun de ces modules comprend trois traverses 1003 solidaires de deux longerons 1004. Chaque longeron 1004 est supporté par deux pieds basculants 1005 articulés en rotation autour d'un axe 1005A au longeron et autour d'un axe 1005B au pavillon.

Les pieds 1005 sont équipés de leviers 1006 actionnables par une poignée 1007, en forme d'anse dans ce mode de réalisation. Dans la position de portage représentée sur la figure 10, chaque levier 1006, présentant la forme générale d'un « 8 », soutient un pied 1005 au niveau de l'axe d'articulation 1005A. Les éléments de fixation 1010 verrouillent par ailleurs la galerie dans la position de portage, en empêchant les modules de s'écarter l'un de l'autre, et donc les pieds de basculer vers la position escamotée.

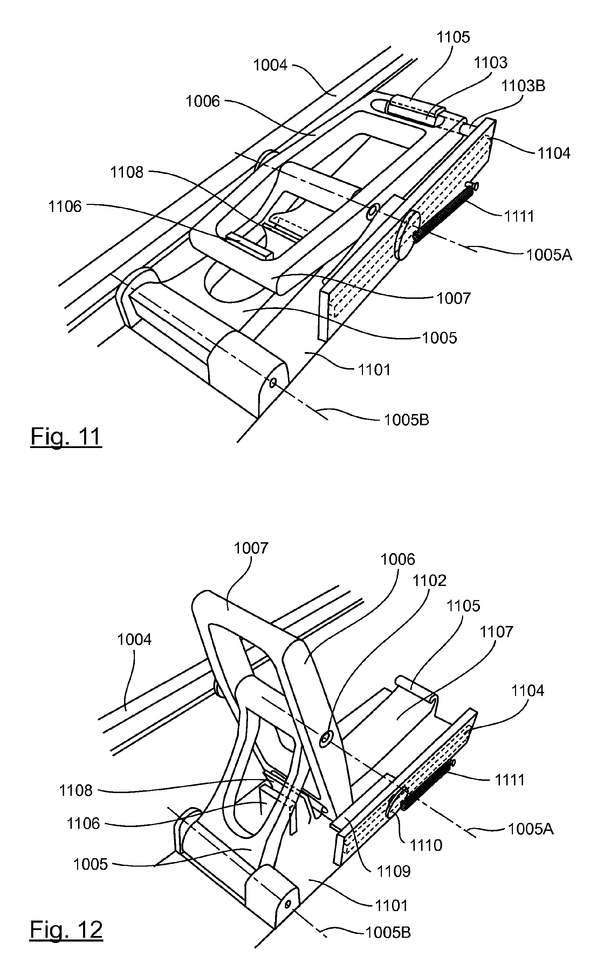

Par la suite, on détaille le redressement d'un pied 1005 entre la position escamotée (figure 11) et la position de portage (figure 12) par actionnement d'un levier 1006.

Comme illustré par la figure 11, dans la position escamotée, le levier 1006 repose à plat en partie sur le pied 1005, et en partie sur le support du pied 1101 fixé au pavillon. Un tel agencement a notamment pour avantage d'améliorer la compacité et l'aspect esthétique du système de galerie en position escamotée.

Le pied 1005 présente un évidement central pour permettre le passage des doigts d'une main. La poignée 1007 du levier 1006 peut ainsi être saisie aisément par le dessus, pour relever la galerie jusqu'à la position de portage.

Le levier 1006 est monté pivotant sur l'axe 1005A sur deux paliers 1102. L'extrémité du levier 1006 opposée à la poignée 1007 comprend une tige 1103 parallèle à l'axe 1005A, dont une portion saillante 1103A pénètre dans une glissière horizontale 1104 formée dans le support 1101 pour guider le levier 1006 le long du support lorsqu'il est actionné. Des pattes 1105 et 1106 formées dans le support 1101 permettent par ailleurs de maintenir le levier 1006 immobile.

Lorsque la poignée 1007 du levier est soulevée par l'utilisateur, la tige 1103 située à l'extrémité opposée du levier glisse sur une rampe 1107 ménagée sur le support 1101, en étant guidée par la portion saillante 1103A coulissant dans la glissière 1104. Le pied 1005 est alors entraîné par le levier et bascule vers le haut en soulevant la traverse 1004.

Lorsque la tige 1103 atteint une position prédéterminée en regard de la glissière, après être passée sous le corps du crochet 1109, elle se loge dans une gorge 1108 ménagée dans le support 1101, prévue pour bloquer sa progression, et un crochet 1109 se plaque sur la portion saillante 1103A, sous l'action d'un ressort 1111 relié de façon excentrée à l'axe 1110 du crochet, pour verrouiller la tige 1103 dans cette position prédéterminée.

À partir de cette position, le levier 1006 prend appui sur le support 1101 et une poussée supplémentaire sur la poignée permet de finir de basculer le pied 1005 dans la position de portage, illustrée figure 12, en profitant du bras de levier supplémentaire procuré par la poignée 1007.

Il convient de noter que deux leviers coopérant avec deux pieds situés sur le même bord d'un module peuvent être manoeuvrés ensemble pour amener la galerie en position de portage.

Dans une variante de ce mode de réalisation particulier, il peut encore être envisagé d'équiper un seul des pieds de chaque module d'un levier.

Dans une autre variante de ce mode de réalisation particulier, il peut également être prévu des moyens de blocage du pied et/ou du levier dans la position de portage.

### 6.4. Autres caractéristiques et avantages de l'invention

Plusieurs adaptations peuvent être envisagées pour l'escamotage des traverses afin de réduire ou même d'éliminer les problèmes de bruits aérodynamiques, d'esthétique et de consommation de carburant.

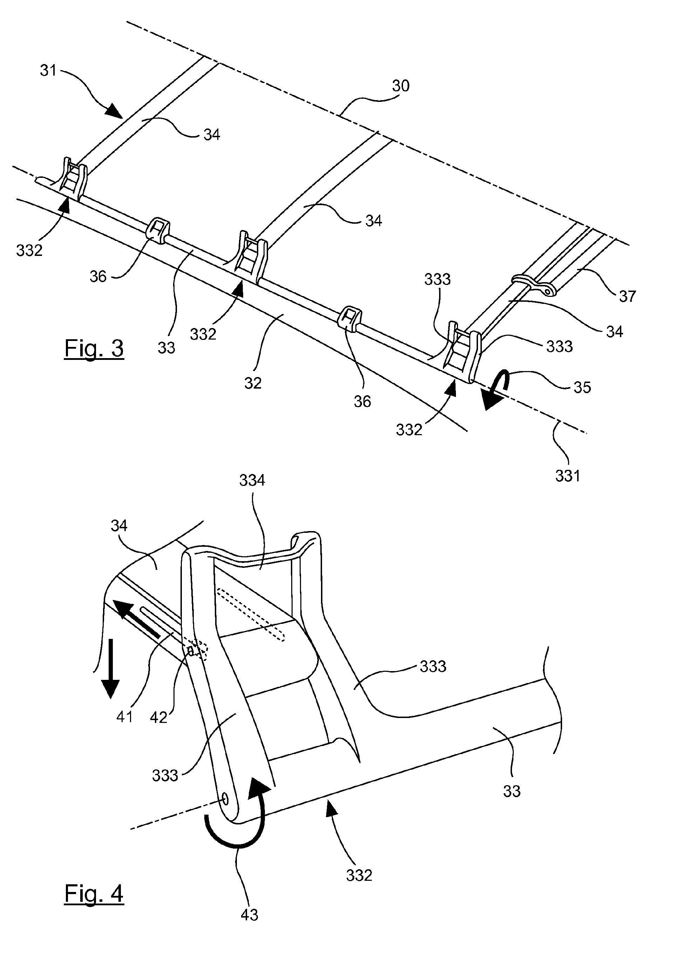

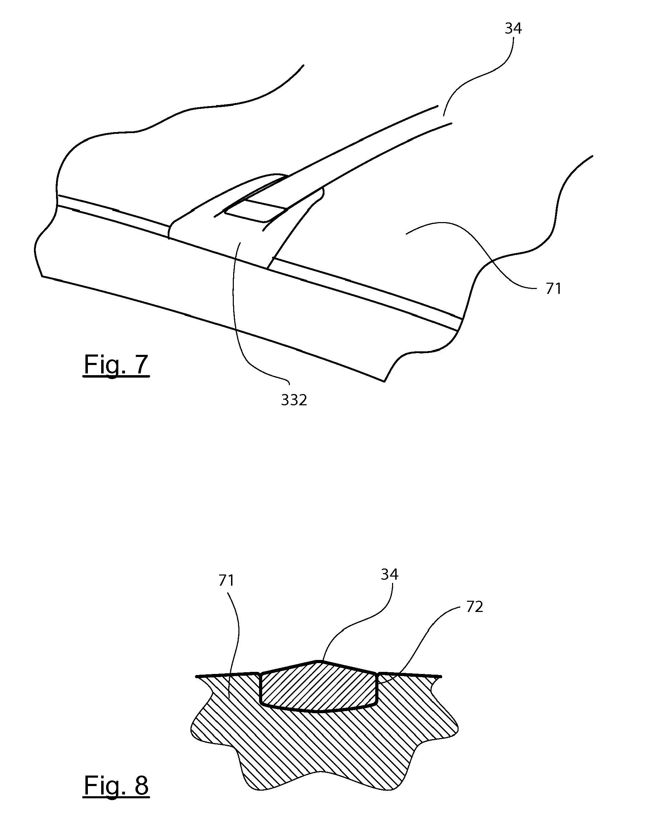

Une approche illustrée par la figure 7 et par la vue en coupe de la figure 8, pour une traverse 34 présentée en référence à la figure 3, permet d'obtenir, en position escamotée, que la traverse 34 affleure avec le pavillon 71 du véhicule automobile. Pour se faire, la traverse 34 s'insère dans un logement 72 prévu dans le pavillon 71.

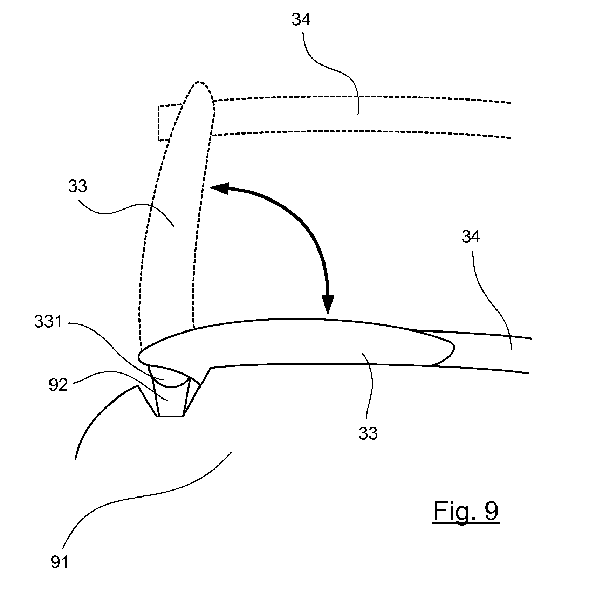

Dans une autre approche illustrée par la figure 9, la traverse 34 vient se poser sur le pavillon 91 en position escamotée. Dans ce mode de réalisation, au moins un des longerons 33 peut être articulé sur un support 92 solidarisé au pavillon 91 permettant que l'axe d'articulation 331 du longeron 33 se situe sensiblement dans le plan du pavillon.

Une autre approche peut faire intervenir une technique intermédiaire où la traverse n'est qu'en partie encastrée, sa partie supérieure dépassant du pavillon.

Dans des variantes des modes de réalisation détaillées ci-dessus, il peut également être envisagé sans sortir du cadre de l'invention :
- de prévoir des moyens d'assistance ou de démultiplication pour faciliter l'actionnement du levier, ces moyens pouvant être pourvus d'une motorisation et actionnés par une commande à distance située par exemple sur la planche de bord à l'intérieur du véhicule ;
- de prévoir un système de galerie ne respectant pas un symétrie parfaite par rapport à l'axe principal du pavillon du véhicule par exemple en disposant des longerons ou des pieds non identiques de chaque côté du pavillon ;
- de fournir un tel système de galerie en plusieurs modules assemblables entre eux pour faciliter son montage sur le véhicule dans le cas où celui-ci est de grande extension et/ou si la hauteur du véhicule est importante ;
- que l'élément saillant coulissant dans la glissière de guidage formée dans la traverse se présente sous la forme d'un ergot.

En outre, le véhicule concerné par l'invention peut notamment être un véhicule de tourisme de type berline, break ou monospace, un véhicule utilitaire, un autocar ...

### 6.5 variante

On présente ci-après une variante d'une galerie escamotable, en référence à la figure 3 dans une demi-vue en perspective, l'aspect du système de galerie dans son entier pouvant être aisément déduit en opérant une projection par rapport à l'axe de symétrie 30.

Le système de galerie 31, monté sur un pavillon 32 de véhicule, comprend deux longerons mobiles en rotation 33, dont un seul est représenté sur la figure 3, portant des moyens de solidarisation solidarisés de façon articulée avec trois traverses 34.

Le longeron 33 peut basculer autour de l'axe 331 (comme figuré par la flèche 35) par rapport au pavillon 32 pour permettre le passage de la position de portage, telle qu'illustrée sur la figure 3, à une position escamotée. Il porte des moyens de solidarisation comprenant trois fourches 332 à deux branches 333 entre lesquelles s'insère une extrémité d'une des traverses 34. Chaque fourche 332 constitue un levier d'axe 331 confondu avec celui du longeron sur lequel on peut agir pour faire pivoter le longeron 33. Une poignée de préhension 334 reliant l'extrémité des branches 333 permet d'actionner ce levier.

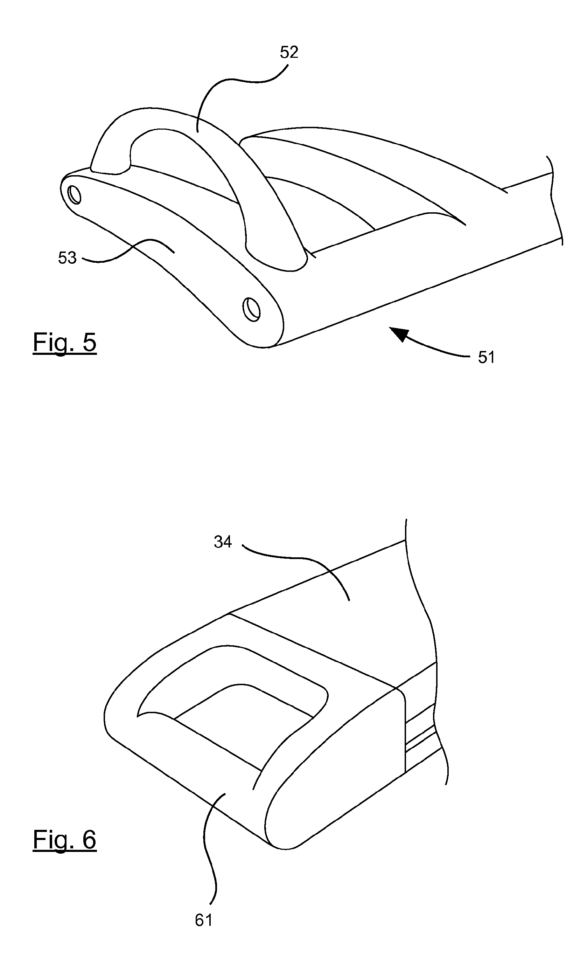

Dans une variante de ce mode de réalisation illustrée par la figure 5, il peut également être envisagé que la poignée de préhension 52 du levier 51 soit fixée sur une seule branche 53 de la fourche formant levier 51.

Comme illustré sur la figure 4 dans une vue de détail de la zone d'une des fourches, chaque extrémité des traverses 34 comprend, dans ce mode de réalisation particulier, une glissière de guidage 41 se présentant sous la forme d'une lumière débouchante.

Dans une variante de ce mode de réalisation, il peut également être envisagé que l'extrémité de chaque traverse soit munie d'une première gorge sur une face latérale en vis-à-vis d'une deuxième gorge sur sa face latérale opposée.

Un élément saillant 42, en forme de queue d'aronde, solidaire de l'une des branches de la fourche formant levier est monté coulissant dans la glissière 41 pour entraîner la traverse vers le bas lors du passage de sa position de portage à sa position escamotée ou vers le haut lors du passage inverse. Ainsi, par exemple, lorsque la poignée 334 du levier est poussée vers l'intérieur du pavillon, le levier pivote dans le sens de la flèche 43, et l'élément saillant 42 coulisse vers le centre de la traverse en entraînant celle-ci vers le bas

Comme on peut le voir sur la figure 3, des moyens d'arrimage tels que des anneaux ou des crochets de sanglage 36 sont également prévus sur le longeron 33 pour permettre d'arrimer les objets transportés sur la galerie. L'extrémité des traverses peut aussi comprendre des moyens d'arrimage supplémentaires 61, comme présenté dans la vue de détail de la figure 6. En outre, de façon à faciliter le chargement des objets lourds ou encombrant sur la galerie, par exemple une valise ou une échelle, un rouleau 37 est monté sur la traverse située à l'arrière de la galerie.

## Revendications

1. Système de galerie pour véhicule automobile, comprenant au moins deux traverses solidaires de deux longerons,
**caractérisé en ce qu'**il comprend au moins quatre pieds comprenant chacun un premier axe d'articulation par rapport audit véhicule et un second axe d'articulation avec un desdits longerons,
et au moins un levier dont l'axe est destiné à être solidarisé audit véhicule agissant sur au moins un desdits longerons, de façon que lesdites traverses puisse prendre au moins deux positions :
- une position escamotée dans laquelle elles sont en contact avec le pavillon dudit véhicule ; et
- une position de portage dans laquelle elles sont sensiblement surélevées par rapport à ladite position escamotée.

2. Système de galerie selon la revendication 1, **caractérisé en ce que** ledit levier est solidarisé par une articulation pivot audit longeron.

3. Système de galerie selon l'une quelconque des revendications 1 et 2,
**caractérisé en ce que** ledit levier comprend une poignée montée sur un bras pouvant prendre au moins deux longueurs :
- une longueur de rangement dans laquelle il est rétracté ; et
- une longueur de travail dans laquelle il est déployé.

4. Système de galerie selon la revendication 3, **caractérisé en ce que** ladite articulation pivot a pour axe ledit second axe, et **en ce qu'**il comprend des moyens de guidage d'une extrémité dudit levier, destinés à coopérer avec au moins une glissière formée et/ou fixée sur ledit véhicule.

5. Système de galerie selon la revendication 4, **caractérisé en ce qu'**il comprend des moyens de blocage desdits moyens de guidage dans au moins une position prédéterminée de ladite glissière.

6. Système de galerie selon la revendication 5, **caractérisé en ce que** lesdits moyens de blocage comprennent des moyens de verrouillage desdits moyens de guidage dans ladite position prédéterminée.

7. Système de galerie selon l'une quelconque des revendications 1 à 6,
**caractérisé en ce que**, dans ladite position escamotée, les traverses pénètrent au moins en partie dans des logements prévus à cet effet dans le pavillon.

8. Système de galerie selon la revendication 7, **caractérisé en ce que** lesdits logements sont conçus de façon que les traverses affleure avec le pavillon dans la position escamotée.

9. Système de galerie selon l'une quelconque des revendications 1 à 8,
**caractérisé en ce qu'**il comprend deux modules (1001, 1002) identiques montés respectivement sur l'avant et sur l'arrière dudit pavillon.

10. Système de galerie selon la revendication 9, **caractérisé en ce que** lesdits modules sont reliés l'un à l'autre par des éléments de fixation (1010)

11. Véhicule automobile comprenant un système de galerie comprenant au moins deux traverses solidaires de deux longerons,
**caractérisé en ce que** ledit système de galerie comprend au moins quatre pieds comprenant chacun un premier axe d'articulation par rapport audit véhicule et un second axe d'articulation avec un desdits longerons,
et au moins un levier dont l'axe est destiné à être solidarisé audit véhicule agissant sur au moins un desdits longerons, de façon que lesdites traverses puissent prendre au moins deux positions :
- une position escamotée dans laquelle elles sont sensiblement en contact avec le pavillon dudit véhicule ; et
- une position de portage dans laquelle elles sont surélevées par rapport à ladite position escamotée.
